# EUROPÄISCHE PATENTSCHRIFT

(11) **EP 1 439 895 B1**
(45) Veröffentlichungstag und Bekanntmachung des Hinweises auf die Patenterteilung: **27.12.2006**
(21) Anmeldenummer: 02790297.2
(22) Anmeldetag: 18.10.2002
(51) Int. Cl.: B01D 46/10, B01D 39/20, F01N 3/02

(54) **HITZEBESTÄNDIGE FILTERLAGE, FILTERKÖRPER UND VERFAHREN ZU SEINER HERSTELLUNG**
HEAT-RESISTANT FILTER LAYER, FILTER BODY AND METHOD FOR THE PRODUCTION THEREOF
COUCHE FILTRANTE THERMORESISTANTE, CORPS FILTRANT ET PROCEDE PERMETTANT DE LE PRODUIRE

(30) Priorität: 29.10.2001 DE 10153283
(43) Veröffentlichungstag der Anmeldung: 28.07.2004
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HODGSON, Jan, 53842 Troisdorf (DE)
(74) Vertreter: Kahlhöfer, Hermann
(86) Internationale Anmeldenummer: PCT/EP2002/011684
(87) Internationale Veröffentlichungsnummer: WO 2003/037482

(56) Entgegenhaltungen:
- EP-A- 0 134 002
- EP-A- 0 325 111
- EP-A- 0 821 145

## Beschreibung

Die Erfindung bezieht sich auf eine hitzebeständige Filterlage aus einem zumindest teilweise für ein Fluid durchströmbaren Material, einen Filterkörper mit mindestens einer solchen hitzebeständigen Filterlage sowie ein Verfahren zur Herstellung eines derartigen Filterkörpers. Diese Filterkörper werden insbesondere zur Reinigung von Abgasen mobiler Verbrennungskraftmaschinen im Automobilbau eingesetzt.

Betrachtet man die Neuzulassungen in Deutschland, so stellt man fest, dass im Jahre 2000 rund ein Drittel aller neu zugelassenen Fahrzeuge Dieselmotoren aufweisen. Dabei ist dieser Anteil traditionsgemäß deutlich höher als beispielsweise in den Ländern Frankreich und Österreich. Dieses gesteigerte Interesse an Diesel-Kraftfahrzeugen hat beispielsweise seinen Ursprung in dem relativ geringen Kraftstoffverbrauch, den derzeit relativ niedrigen Diesel-Kraftstoff-Preisen, aber auch in den verbesserten Fahreigenschaften derartiger Fahrzeuge. Auch unter umweltspezifischen Gesichtspunkten ist ein Dieselfahrzeug sehr reizvoll, da dieses gegenüber Benzin-angetriebenen Fahrzeugen eine deutlich reduzierte CO₂-Emission aufweist. Allerdings muss auch festgestellt werden, dass der Anteil der bei der Verbrennung erzeugten Rußpartikel deutlich über dem von Benzin-angetriebenen Fahrzeugen liegt.

Betrachtet man nun die Reinigung von Abgasen, insbesondere von Dieselmotoren, so lassen sich Kohlenwasserstoffe (HC) wie auch Kohlenmonoxide (CO) im Abgas in bekannter Weise oxidieren, indem diese beispielsweise mit einer katalytisch aktiven Oberfläche in Kontakt gebracht werden. Die Reduktion von Stickoxiden (NOₓ) unter sauerstoffreichen Bedingungen ist allerdings schwieriger. Ein Drei-Wege-Katalysator, wie er beispielsweise bei Otto-Motoren eingesetzt wird, bringt nicht die gewünschten Effekte. Aus diesem Grunde wurde das Verfahren der Selektiven Katalytischen Reduktion (SCR: "selective catalytic reduction") entwickelt. Weiterhin wurden NOₓ-Adsorber auf ihren Einsatz im Hinblick auf die Stickoxid-Reduktion erprobt.

Die Diskussion, ob Partikel oder langkettige Kohlenwasserstoffe einen negativen Effekt auf die menschliche Gesundheit haben, wird nun schon über einen sehr langen Zeitraum betrieben, ohne bislang eine endgültige Aussage getroffen zu haben. Ungeachtet davon ist das Bestreben erkennbar, dass derartige Emissionen über einen gewissen Toleranzbereich hinaus nicht an die Umgebung abgegeben werden sollen. Insofern stellt sich die Frage, welche Filtereffizienz tatsächlich notwendig ist, um die bislang bekannten gesetzlichen Richtlinien auch für die Zukunft einhalten zu können. Betrachtet man das derzeitige Abgasverhalten von im Verkehr befindlichen Fahrzeugen in der Bundesrepublik Deutschland, so ist festzustellen, dass die meisten der 1999 nach EU III zertifizierten Pkws auch die Anforderungen gemäß EU IV einhalten können, wenn diese mit einem Filter ausgestattet werden, welcher eine Effektivität von wenigstens 30 bis 40 % aufweist.

Zur Reduktion von Partikel-Emissionen sind Partikelfallen bekannt, welche aus einem keramischen Substrat aufgebaut sind. Diese weisen Kanäle auf, so dass das zu reinigende Abgas in die Partikelfalle einströmen kann. Die benachbarten Kanäle sind abwechselnd verschlossen, so dass das Abgas auf der Eintrittsseite in den Kanal eintritt, durch die keramische Wand hindurchtritt und durch den benachbarten Kanal auf der Austrittsseite wieder entweicht. Derartige Filter erreichen eine Effektivität von ca. 95 % über die gesamte Breite der auftretenden Partikelgrößen.

Zusätzlich zu chemischen Wechselwirkungen mit Additiven und speziellen Beschichtungen stellt die sichere Regeneration des Filters im Abgassystem eines Automobils immer noch ein Problem dar. Die Regeneration der Partikelfalle ist erforderlich, da die zunehmende Ansammlung von Partikelteilchen in der zu durchströmenden Kanalwand einen stetig steigenden Druckverlust zur Folge hat, der negative Auswirkungen auf die Motorleistung hat. Die Regeneration umfasst im wesentlichen das kurzzeitige Aufheizen der Partikelfalle bzw. der darin angesammelten Partikel, so dass die Rußpartikel in gasförmige Bestandteile umgesetzt werden. Diese hohe thermische Beanspruchung der Partikelfalle hat allerdings negative Auswirkungen auf die Lebensdauer.

Zur Vermeidung dieser diskontinuierlichen und thermisch sehr verschleißfördernden Regeneration wurde ein System zur kontinuierlichen Regeneration von Filtern entwickelt (CRT: "continuous regeneration trap"). In einem solchen System werden die Partikel bei Temperaturen bereits oberhalb von 200°C mittels Oxidation mit NO₂ verbrannt. Das hierzu erforderliche NO₂ wird häufig durch einen Oxidationskatalysator erzeugt, der stromaufwärts vor der Partikelfalle angeordnet ist. Hierbei stellt sich jedoch gerade im Hinblick auf die Anwendung bei Kraftfahrzeugen mit Diesel-Kraftstoff das Problem, dass nur ein unzureichender Anteil von Stickstoffmonoxid (NO) im Abgas existiert, welcher zu dem gewünschten Stickstoffdioxid (NO₂) umgewandelt werden kann. Infolgedessen kann bislang nicht sichergestellt werden, dass eine kontinuierliche Regeneration der Partikel falle im Abgassystem stattfindet.

Es ist weiter zu berücksichtigen, dass neben nichtumwandelbaren Partikeln auch Öl oder zusätzliche Rückstände von Additiven in einer Partikelfalle angelagert werden, die nicht ohne weiteres regeneriert werden können. Aus diesem Grund müssen bekannte Filter in regelmäßigen Abständen ausgetauscht und/oder gewaschen werden. Plattenartig aufgebaute Filtersysteme versuchen dieses Problem dadurch zu lösen, dass eine vibrations-ähnliche Anregung ermöglicht wird, welche zum Herauslösen dieser Bestandteile aus dem Filter führt. Allerdings gelangt somit der nicht regenerierbare Anteil der Partikel zum Teil ohne weitere Behandlung direkt in die Umgebung.

Zusätzlich zu einer minimalen Reaktionstemperatur und einer spezifischen Verweildauer muss zur kontinuierlichen Regeneration von Partikeln mit NO₂ ausreichend Stickoxid zur Verfügung gestellt werden. Tests bezüglich der dynamischen Emission von Stickstoffmonoxid (NO) und Partikeln haben klar hervorgebracht, dass die Partikel gerade dann emittiert werden, wenn kein oder nur sehr wenig Stickstoffmonoxid im Abgas vorhanden ist und umgekehrt. Daraus folgt, dass ein Filter mit realer kontinuierlicher Regeneration im wesentlichen als Kompensator oder Speicher fungieren muss, so dass gewährleistet ist, dass die beiden Reaktionspartner zu einem gegebenen Zeitpunkt in den benötigten Mengen im Filter verweilen. Weiterhin ist der Filter möglichst nahe an der Verbrennungskraftmaschine anzuordnen, um bereits unmittelbar nach dem Kaltstart möglichst hohe Temperaturen annehmen zu können. Zur Bereitstellung des erforderlichen Stickstoffdioxides ist dem Filter ein Oxidationskatalysator vorzuschalten, welcher Kohlenmonoxid (CO) und Kohlenwasserstoffe (HC) umsetzt und insbesondere auch Stickstoffmonoxid (NO) in Stickstoffdioxid (NO₂) konvertiert. Bei einer motornahen Anordnung dieses Systems aus Oxidationskatalysator und Filter ist insbesondere die Position vor einem Turbolader geeignet, der bei Diesel-Kraftfahrzeugen häufig zur Erhöhung des Ladedrucks in der Brennkammer verwendet wird.

Betrachtet man diese grundsätzlichen Überlegungen, so stellt sich für den tatsächlichen Einsatz im Automobilbau die Frage, wie ein derartiger Filter aufgebaut ist, der in einer solchen Position und in Anwesenheit extrem hoher thermischer und dynamischer Belastungen einen zufrieden stellenden Filterwirkungsgrad aufweist. Dabei sind insbesondere die räumlichen Gegebenheiten zu berücksichtigen, die ein neues Konzept für Filter bedingen. Während bei den klassischen Filtern, welche im Unterboden eines Kfzs angeordnet wurden, ein möglichst großes Volumen im Vordergrund stand, um eine hohe Verweilzeit der noch nicht umgesetzten Partikel im Filter und somit eine hohe Effizienz zu gewährleisten, besteht bei einer motornahen Anordnung nicht genügend Platz bzw. Raum zur Verfügung.

Hierzu wurde ein neues Konzept entwickelt, welches im wesentlichen unter dem Begriff "offenes Filtersystem" bekannt geworden ist. Diese offenen Filtersysteme zeichnen sich dadurch aus, dass auf ein konstruktives, wechselseitiges Verschließen der Filterkanäle verzichtet werden kann. Dabei wird vorgesehen, dass die Kanalwände zumindest teilweise aus porösem oder hochporösem Material aufgebaut sind und dass die Strömungskanäle des offenen Filters Umlenk- oder Leitstrukturen aufweist. Diese Einbauten bewirken, dass die Strömung bzw. die darin enthaltenen Partikel hin zu den Bereichen aus porösem oder hochporöserem Material gelenkt werden. Dabei hat sich überraschenderweise herausgestellt, dass die Partikel durch Interception und/oder Impaktion an und/oder in der porösen Kanalwand haften bleiben. Für das Zusammenkommen dieser Wirkung sind die Druckunterschiede im Strömungsprofil des strömenden Abgases von Bedeutung. Durch die Umlenkung können zusätzlich lokale Unterdruck- oder Überdruckverhältnisse entstehen, die zu einem Filtrationseffekt durch die poröse Wand hindurch führen, da die obengenannten Druckunterschiede ausgeglichen werden müssen.

Die Partikelfalle ist dabei im Gegensatz zu den bekannten geschlossenen Sieb- oder Filtersystemen offen, weil keine Strömungssackgassen vorgesehen sind. Diese Eigenschaft kann somit auch zur Charakterisierung derartiger Partikelfilter dienen, so dass beispielsweise der Parameter "Strömungsfreiheit" zur Beschreibung geeignet ist. So bedeutet eine "Strömungsfreiheit" von 20 %, dass in einer Querschnittsbetrachtung ca. 20 % der Fläche durchschaubar sind. Bei einem Partikelfilter mit einer Kanaldichte von ca. 600 cpsi ("cells per square inch") mit einem hydraulischen Durchmesser von 0,8 mm entspräche diese Strömungs&eiheit einer im wesentlichen zusammenhängenden Fläche von über 0,1 mm². Zur besseren Erläuterung kann man auch sagen, dass ein Partikelfilter dann als offen bezeichnet wird, wenn er grundsätzlich von Partikeln vollständig durchlaufen werden kann, und zwar auch von Partikeln, die erheblich größer als die eigentlich auszufilternden Partikel sind. Dadurch kann ein solcher Filter selbst bei einer Agglomeration von Partikeln während des Betriebes nicht verstopfen. Ein geeignetes Verfahren zur Messung der Offenheit eines Partikelfilters ist beispielsweise die Prüfung, bis zu welchem Durchmesser kugelförmige Partikel noch durch einen solchen Filter rieseln können. Bei den vorliegenden Anwendungsfällen ist ein Filter insbesondere dann offen, wenn Kugeln von größer oder gleich 0,1 mm Durchmesser noch hindurchrieseln können, vorzugsweise Kugeln mit einem Durchmesser oberhalb von 0,2 mm, insbesondere mit einem Durchmesser oberhalb von 0,3 mm.

Die Dokumente EP-A-0821145 und EP-A-0325111 beschreiben hitzbeständige Filter, bei denen eine einzelne Filterlage im Randbereich eine verschiedene Lagendicke aufweist.

Gerade in Hinblick auf die Realisierung eines solchen offenen Filtersystems ist es nunmehr Aufgabe der vorliegenden Erfindung, eine hitzebeständige Filterlage anzugeben, welche gerade für den Einsatz im Rahmen der kontinuierlichen Regeneration und den daraus resultierenden Anforderungen besonders gut geeignet ist. Insofern muss das Filtersystem den hohen thermischen und dynamischen Belastungen im Abgassystem eines Pkws standhalten, welche ihren Ursprung in dem pulsartigen Ausstoß von sehr heißem Abgas haben. Weiterhin soll ein entsprechender Filterkörper angegeben werden, der zur signifikanten Reduktion von Partikeln im Abgassystem geeignet ist. Zusätzlich soll ein Verfahren zur Herstellung des Filterkörpers angegeben werden. Die Filterlage soll dabei so gestaltet sein, dass die Ausbildung von fügetechnischen Verbindungen; insbesondere Lotverbindungen oder Schweißverbindungen, begünstigt wird.

Diese Aufgaben werden gelöst durch eine hitzebeständige Filterlage mit den Merkmalen des Patentanspruchs 1, einem Filterkörper zur Reinigung von Abgasen einer Verbrennungskraftmaschine gemäß den Merkmalen des Patentanspruchs 7 sowie einem Verfahren zur Herstellung eines solchen Filterkörpers mit den Verfahrensschritten gemäß Patentanspruch 17. Weitere vorteilhafte Ausgestaltungen sind in den jeweils abhängigen Patentansprüchen beschrieben, wobei die dort aufgezeigten Merkmale einzeln oder in jeder beliebigen, sinnvollen Kombination miteinander auftreten können.

Die hitzebeständige Filterlage ist zumindest teilweise aus für ein Fluid durchströmbarem Material und weist wenigstens einen Filterabschnitt und mindestens einen Randbereich auf. Die erfindungsgemäße Filterlage zeichnet sich dadurch aus, dass diese in dem mindestens einen Randbereich eine von dem mindestens einen Filterabschnitt verschiedene Lagendicke hat. Insofern weist die Filterlage unterschiedliche Bereiche auf, die jeweils verschiedene Funktionen haben. Während der Filterabschnitt primär dazu dient, die im Abgas enthaltenen

Partikel od. dgl. herauszufiltern und in Hohlräumen, Poren od. dgl. bzw. an dem Filtermaterial selbst zumindest zeitweise ein- oder anzulagern, fungiert der mindestens eine Randbereich zur Ausbildung von fügetechnischen Verbindungen. Die Ausführung der Filterlage mit unterschiedlichen Lagendicken in diesen Bereichen schafft eine deutlich erkennbare räumliche Abgrenzung, so dass beispielsweise im Hinblick auf die Fertigung eines eine solche Filterlage aufweisenden Filterkörpers Montagefehler vermieden werden.

Zur räumlichen Anordnung des mindestens einen Randbereichs und des mindestens einen Filterabschnitts bezüglich der Filterlage sei noch angemerkt, dass der Filterabschnitt bevorzugt in einem zentralen Bereich der Filterlage angeordnet ist. Der mindestens eine Randbereich ist bevorzugt zumindest nahe einer Kante ausgebildet, unter Umständen ist es jedoch auch möglich, den Randbereich um den mindestens einen Filterabschnitt herum, ähnlich einem Rahmen, auszubilden. Insofern besteht die Möglichkeit, einen relativ großflächigen, zentral angeordneten Filterabschnitt auszubilden, der von mindestens einem Randbereich umgeben ist, alternativ hierzu ist es gelegentlich aber auch sinnvoll, mehrere Filterabschnitte vorzusehen, so dass diese jeweils durch mindestens einen (insbesondere rahmen-ähnlich ausgeführten) Randbereich abgegrenzt sind, ähnlich einem Schachbrett-Muster. Die Ausgestaltung der hitzebeständigen Filterlage mit mehreren Filterabschnitten, welche jeweils von mindestens einem Randbereich umgeben sind, erlaubt relativ steife Verbindungen innerhalb eines entsprechenden Filterkörpers, da eine Verbindung von benachbarten Filterlagen in der Mehrzahl von Randbereichen, welche auch in zentralen Bereichen der Filterlage angeordnet sind, eine flächige und gleichmäßig verteilte Anbindung schaffen.

Gemäß einer weiteren Ausgestaltung der Filterlage ist die Lagendicke in dem mindestens einen Randbereich kleiner als in dem mindestens einen Filterabschnitt, insbesondere kleiner als 60 %, bevorzugt kleiner als 50 % oder sogar kleiner als 35 %. Eine solche Ausgestaltung der Filterlage hat den Vorteil, dass in dem mindestens einen Filterabschnitt, welcher dickwandiger ausgeführt ist, ein größeres Volumen bereitgestellt wird. Dies hat zur Folge, dass in diesem mindestens einen Filterabschnitt ausreichend Poren, Hohlräume od. dgl. bereitgestellt werden, welche zur Aufnahme bzw. Ablagerung von beispielsweise Rußpartikeln dienen. Dabei werden bei derartig großen Poren insbesondere Partikel mit einem Partikeldurchmesser von 100 nm bis 250 nm eingelagert. Die hitzebeständige Filterlage ist bevorzugt aus einem Fasermaterial, welches beispielsweise einen relativ lockeren Materialverbund aus Fasern darstellt. Dieser Materialverbund kann beispielsweise ein Fasergewebe oder ein Fasergestrick aus keramischen Fasern sein, alternativ oder kumulativ können aber auch Metallfasern, Sintermaterialien, Drahtgewebe oder ähnliches verwendet werden.

Der mindestens eine Randbereich besteht im wesentlichen aus dem gleichen Material wie der mindestens eine Filterabschnitt, wobei er einen komprimierten oder verdichteten Faserverbund umfasst. Während das Filtermaterial im Bereich des mindestens einen Filterabschnitts für ein Fluid durchströmbar ist, insbesondere für einen Abgasstrom, ist der mindestens eine Randbereich bevorzugt für ein Fluid im wesentlichen undurchdringbar. Das bedeutet, dass eine solche, zumindest partielle, Verdichtung des Fasermaterials vorgenommen wurde, dass eine Vielzahl von Hohlräumen, Öffnungen, Poren, Durchlässen od. dgl. verschlossen wurden. Insofern ist die reduzierte Lagendicke die Folge eines Komprimierungsvorganges des Filtermaterials.

Die Undurchlässigkeit des Filtermaterials in dem mindestens einen Randbereich hat zur Folge, dass beispielsweise Verbindungsmaterial oder Zusatzwerkstoff (Lot, Schweißadditive, od. dgl.), gezielt auf die Oberfläche in dem mindestens einen Randbereich aufgebracht werden kann, wobei bei einer Erwärmung der Verbindungsmittel bzw. Schweißzusatzstoffe verhindert wird, dass sich diese Mittel im Inneren des Fasermaterials anlagern und somit für eine Verbindung benachbarter Filterlagen nicht zur Verfügung stehen. In Abhängigkeit der zur Ausbildung von fügetechnischen Verbindungen benötigten Verbindungsmittel ist eine geeignete Komprimierung vorzunehmen, so dass eine Reduzierung der Lagendicke in dem mindestens einen Randbereich vorteilhafterweise um mindestens 40 %, insbesondere mindestens 50 % oder sogar um mehr als 65 % erfolgt. Dabei ergeben sich in dem mindestens einen Randbereich Lagendicken in einem Bereich von weniger als 1 mm, insbesondere kleiner 0,5 mm und ggf. sogar kleiner als 0,1 mm.

Gemäß einer weiteren Ausgestaltung hat der mindestens eine Randbereich ausgehend von einer Kante der Filterlage eine Randbreite von höchstens 30 mm, insbesondere von höchstens 20 mm, bevorzugt von höchstens 10 mm oder sogar von nur maximal 5 mm. Dies bedeutet, dass insbesondere der Kantenbereich der Filterlage zur Ausbildung fiigetechnischer Verbindungen verwendet wird. Dies ist von besonderem Vorteil, da gerade diese Bereiche im Hinblick auf den pulsierenden Abgasstrom besonders beansprucht werden. Die Ausgestaltung der Filterlage in diesem Kantenbereich mit einem relativ stark komprimierten Filtermaterial vermeidet Auflösungserscheinungen, da ein deutlich beständigerer Verbund von Fasern dort vorliegt. Zudem werden die benachbarten Filterlagen in einem entsprechenden Filterkörper in diesem Kantenbereich miteinander verbunden, so dass auch ein Schwingen oder Flattern dieser Bereiche vermieden wird. Die Randbreite ist dabei im Hinblick auf die im Einsatz auftretenden dynamischen Belastungen auszulegen, wobei auch das thermische Ausdehnungsverhalten der Filterlage zu berücksichtigen ist. Insofern ist es vorteilhaft, möglichst schmale Randbereiche auszuwählen, wenn die Filterlage gemäßigten dynamischen und gemäßigten bis hohen thermischen Belastungen ausgesetzt wird.

Weiter wird vorgeschlagen, dass die Filterlage mindestens eine Faserschicht umfasst, welche vorzugsweise eine Faserschichtdicke von höchstens 3 mm hat, insbesondere von höchstens 1 mm und bevorzugt von maximal 0,5 mm. Die Faserschichtdicke ist insbesondere unter Berücksichtigung des zu reinigenden Abgasstromes bzw. der darin enthaltenen Partikel auszuwählen. Weiter ist zu berücksichtigen, dass mit einer höheren Faserschichtdicke ein größeres Speichervolumen bzw. eine erhöhte Anzahl von Fasern bereitgestellt wird, so dass derartige Filterlagen nicht so häufig regeneriert werden müssen und folglich auch in motorfernen Bereichen, wie beispielsweise im Unterboden eines Automobils, eingesetzt werden können. In solch motorfernen Positionen erreicht das Abgas erst nach einem verhältnismäßig langen Zeitraum die zur Regeneration erforderliche Temperatur, so dass für diesen Zeitraum ausreichend Speicherkapazität bereitgestellt werden muss. Ist eine Anordnung der Filterlage in sehr heißen Bereichen eines Abgassystems gewünscht, insbesondere in motornaher Anordnung, kann ggf. eine kontinuierliche Regeneration gewährleistet werden, so dass hier bevorzugt Filterlagen mit einer sehr geringen Faserschichtdicke verwendet werden.

Eine vorteilhafte Weiterbildung der Filterlage umfasst wenigstens eine Metallschicht, die vorzugsweise die Filterlage nach außen abgrenzt und insbesondere eine Metallschichtdicke von höchstens 0,05 mm aufweist, bevorzugt von höchstens 0,03 mm oder sogar von maximal nur 0,015 mm: Diese Metallschicht ist dabei bevorzugt in dem mindestens einen Filterabschnitt für ein Fluid durchdringbar, weist also Öffnungen, Durchlässe od. dgl. auf Die Metallschicht erstreckt sich bevorzugt auch bis an oder über den mindestens einen Randbereich, wobei die Metallschicht in dem mindestens einen Randbereich vorteilhafterweise für ein Fluid undurchdringbar gestaltet ist. Als Material für eine derartige Metallschicht kommen insbesondere Aluminium-Chrom-Legierungen zum Einsatz, wie sie bereits aus der Herstellung von metallischen Wabenkörpern als Katalysator-Trägerkörper zur Reinigung von Abgasen bekannt sind. Die Metallschicht kann dabei als Beschichtung oder als separate Folie ausgeführt sein.

Besonders vorteilhaft ist es, dass die Filterlage eine Sandwich-Struktur ist, und mindestens eine Faserschicht und wenigstens eine Metallschicht aufweist. Die Metallschicht bildet dabei bevorzugt eine die Faserschicht umschließende Hülle, so dass die Faserschicht im Inneren der mindestens einen Metallschicht unverlierbar angeordnet ist. Unter einer Hülle ist in diesem Zusammenhang eine Anordnung der mindestens einen Metallschicht zu verstehen, bei der sich die mindestens eine Metallschicht zumindest teilweise auch über die Begrenzung der Faserschicht hinaus erstreckt, insbesondere diese vollständig umschließt. Insofern ist zumindest teilweise eine Hülle über den gesamten Umfang der Faserschicht ausgebildet. Dieses Umgreifen der Metallschicht um die Begrenzung der Faserschicht hat demnach zur Folge, dass eine Relativbewegung der Faserschicht gegenüber der mindestens einen Metallschicht in zumindest einer Richtung formschlüssig behindert wird.

Die Ausbildung einer derartigen Sandwich-Struktur vereint mehrere Vorteile, die insbesondere im Hinblick auf die motornahe Anordnung einer solchen Filterlage von Bedeutung sind. Die mindestens eine Metallschicht stellt eine Art Schutzhülle dar, welche die innenliegende Faserschicht vor den auftretenden Druckschlägen bzw. Temperaturspitzen schützt. Die Faserschicht stellt gegenüber der Metallschicht einen deutlich lockereren Materialverbund aus Fasern dar. Die Faserschicht kann dabei eine sehr hohe Porosität aufweisen, da diese wegen der Anwesenheit einer sie schützenden Metallschicht nicht vordergründig auf Festigkeit ausgelegt werden muss. Insofern können besonders große Freiräume, Poren od. dgl. in der Faserschicht realisiert werden. Dies wird insbesondere dadurch unterstützt, dass die mindestens eine Metallschicht band- oder folienähnlich aufgebaut ist, also eine relativ große Anlagefläche bietet. Folglich sind hier deutlich lockerer gepackte Fasermaterialien einsetzbar, als beispielsweise bei bekannten Drahtnetzen, die zur Wahrung der Formstabilität der Filterlagen bislang eingesetzt wurden.

Seither wurden derartige Sandwich-Strukturen so ausgebildet, dass jeweils eine Stützstruktur auf beiden Seiten des Filtermaterials angeordnet ist (insbesondere Drahtgeflechte), und diese Sandwich-Struktur anschließend in die gewünschte Form gebogen bzw. umgeformt wurde. Dabei wurden diese Sandwich-Strukturen so in dem Abgasstrom angeordnet, dass die Begrenzung (bzw. Stirnfläche) des Filtermaterials ungeschützt dem pulsierenden Abgasstrom ausgesetzt waren. Dies führte zu Auflösungserscheinungen gerade in diesen Stirnbereichen. Um sicherzustellen, dass das Fasermaterial über einen längeren Zeitraum zwischen den Drahtgeweben fixiert ist, musste diese Sandwich-Struktur großflächig (teilweise sogar über die gesamte Oberfläche) unter hohem Druck zusammengepresst werden, was aufgrund der daraus resultierenden, sehr kleinen Poren bzw. Freiräumen zur Ansammlung von Partikeln spürbare Einbußen betreffend die Effektivität des Filtermaterials sowie einen unerwünscht hohen Druckverlust über den Filter zur Folge hatte. Dies wird bei der hier vorgeschlagenen Sandwich-Struktur auf einfache Weise vermieden, da ein Umgreifen der mindestens einen Metallschicht um die Begrenzung der Faserschicht herum die unverlierbare Anordnung der Faserlage im Inneren direkt zur Folge hat.

Gemäß einem weiteren Aspekt der Erfindung wird ein Filterkörper zur Reinigung von Abgasen einer Verbrennungskraftmaschine vorgeschlagen, welcher zumindest teilweise strukturierte Lagen umfasst, die so gestapelt und/oder gewickelt sind, dass für ein Abgas durchströmbare Kanäle gebildet sind. Der erfindungsgemäße Filterkörper weist dabei zumindest eine oben beschriebene hitzebeständige Filterlage auf. Der Filterkörper kann dabei nach dem herkömmlichen Prinzip aufgebaut sein, dass die Kanäle wechselseitig verschlossen sind, so dass der gesamte Abgasstrom durch die hitzebeständige Filterlage hindurchströmt. Bevorzugt ist jedoch eine Ausgestaltung des Filterkörpers nach dem eingangs beschriebenen "offenen System", weist also eine Strömungsfreiheit von mindestens 20 %, insbesondere mindestens 40 % oder sogar von über 50 % auf. Das bedeutet, dass der offene Filterkörper über die gesamte Länge der Kanäle frei durchströmbare Querschnitte aufweist, wobei in den Kanälen Mittel zur Erzeugung von Druckunterschieden bzw. Mittel zur Beeinflussung der Strömungsrichtung im Kanal vorgesehen sind. Dadurch wird bewirkt, dass das zu reinigende Abgas zumindest teilweise zur hitzebeständigen Filterlage gelenkt wird, die Filterlage zumindest teilweise durchdringt, und somit eine Anlagerung bzw. Speicherung von Partikeln im Filtermaterial bewirkt wird.

Besonders bevorzugt ist die Ausgestaltung des Filterkörpers mit Lagen, welche mindestens eine strukturierte Blechfolie und mindestens eine im wesentlichen glatte bzw. unstrukturierte Filterlage umfassen, wobei die Lagen in wenigstens einem Verbindungsabschnitt miteinander fügetechnisch verbunden sind, insbesondere verlötet oder verschweißt. Das bedeutet, dass die mindestens eine strukturierte Blechfolie und die mindestens eine Filterlage gestapelt und/oder gewickelt werden, wobei aufgrund der Struktur der Blechfolie, welche prinzipiell als Abstandshalter benachbarter glatter Filterlagen fungiert, Kanäle gebildet werden. Diese Kanäle verlaufen bevorzugt im wesentlichen parallel zueinander. Um zu gewährleisten, dass eine Relativbewegung der Lagen des Filterkörpers auch unter hohen thermischen und dynamischen Beanspruchungen im wesentlichen vermieden wird, sind diese miteinander fügetechnisch zu verbinden. Hierzu eignen sich insbesondere Lot- oder Schweißverbindungen, wie sie bereits aus der Herstellung von metallischen Wabenkörpern als Katalysator-Trägerkörper im Automobilbau bekannt sind.

Besonders vorteilhaft ist es dabei, dass der wenigstens eine Verbindungsabschnitt in dem mindestens einen Randbereich der Filterlage angeordnet ist. Das heißt beispielsweise, dass der Verbindungsabschnitt vorzugsweise kleiner auszuführen ist, als über die gesamte Erstreckung der Filterlage. Dies ist deshalb vorteilhaft, weil vorliegend zwei unterschiedliche Materialien (Blechfolie und Filterlage) miteinander verbunden werden, welche ein unterschiedliches thermisches Ausdehnungsverhalten aufweisen. Die Verbindung dieser benachbart zueinander angeordneten Komponenten in nur einem relativ kleinen Verbindungsabschnitt gewährleistet, dass dieses Ausdehnungsverhalten aufgrund einer gemeinsamen Verbindung miteinander nicht signifikant behindert wird. Dies hat besonders positive Auswirkungen auf die Lebensdauer eines solchen Filterkörpers, da die Wahrscheinlichkeit einer Rissausbildung nahe des Verbindungsabschnittes deutlich reduziert wird. Eine räumlich übereinstimmende Anordnung von dem mindestens einen Verbindungsabschnitt und dem wenigstens einen Randbereich führt zu besonders dauerhaften Verbindungen, da die Filterlage in dem Randbereich für das Verbindungsmittel (Lot oder Schweißwerkstoff) undurchdringbar ist, so dass dieses auch während der Ausbildung der fügetechnischen Verbindung in dem Kontaktbereich der miteinander zu verbindenden Komponenten zur Verfügung gestellt wird.

In Anbetracht der Tatsache, dass die erfindungsgemäße hitzebeständige Filterlage mit unterschiedlichen Lagendicken ausgeführt ist, ist es besonders vorteilhaft, dass Mittel zur Kompensation der verschiedenen Lagendicken der Filterlage im Filterkörper vorhanden sind. Bei Anlage einer benachbarten Komponente an die erfindungsgemäße Filterlage ist im Bereich des mindestens einen Filterabschnitts eine im wesentlichen formschlüssige Anlage der Komponenten aneinander gegeben. Da beispielsweise die Blechfolien im wesentlichen eine ebene Auflagefläche haben, die erfindungsgemäße Filterlage jedoch einen Absatz beim Übergang von dem mindestens einen Filterabschnitt hin zu dem mindestens einen Randbereich bildet, würde eine Art Spalt zwischen der Blechfolie und der Filterlage in dem mindestens einen Randbereich entstehen. Dieser Spalt hätte ein Ausmaß, welches durch Lot oder Schweißwerkstoff allein häufig nicht überbrückt werden könnte. Insofern werden Mittel zur Kompensation dieses Spaltes benötigt, welche auch in dem mindestens einen Randbereich der Filterlage einen Kontakt benachbart zueinander angeordneter Komponenten des Filterkörpers sicherstellen. Hierzu werden im folgenden beispielhaft einige unterschiedliche Kompensationsmittel erläutert.

Für den Fall, dass die Lagendicke der Filterlage in dem mindestens einen Randbereich gegenüber dem mindestens einen Filterabschnitt reduziert ausgeführt ist, wird vorgeschlagen, dass der mindestens eine Randbereich einen Umformbereich hat, der sich zumindest teilweise selbst überlappt und bevorzugt sogar verlötet ist. Das bedeutet, dass der mindestens eine Randbereich, welcher insbesondere nahe wenigstens einer Kante der Filterlage angeordnet ist, mit einer größeren Randbreite ausgeführt wird, als anschließend ein Verbindungsabschnitt generiert werden soll. Der über den Verbindungsabschnitt hinausragende Teil des Randbereiches wird nun so umgebogen, gefalzt, geknickt od. dgl., dass diese überstehenden Bereiche wieder in den Verbindungsabschnitt hineinragen. Somit liegen Teilbereiche des Randbereichs benachbart zueinander, bevorzugt sogar aneinander an, so dass die Lagendicke zumindest teilweise in dem mindestens einen Randbereich wenigstens verdoppelt wird. Dies bietet sich beispielsweise bei Filterlagen an, die in dem mindestens einen Randbereich eine Lagendicke aufweisen, die im wesentlichen nur 50 % der Lagendicke in dem mindestens einen Filterabschnitt beträgt. Bei dem Umformen des mindestens einen Randbereiches wird somit zumindest auf einer Seite der Filterlage eine im wesentlichen ebene Anlagefläche für benachbarte Komponenten des Filterkörpers bereitgestellt. Um zu verhindern, dass dieser umgeformte bzw. umgebogene Teilbereich des mindestens einen Randbereichs infolge der dynamischen Belastungen in einem Abgassystem eines Automobils zu flattern oder schwingen beginnt, oder sich von der Filterlage löst, ist es besonders vorteilhaft, den überlappenden Teil des Randbereiches, welcher vorzugsweise an dem Randbereich selbst anliegt, auch (mit sich selbst) zu verlöten bzw. zu verschweißen. Im Hinblick auf ein Schweißverfahren hat sich hierbei das Rollnahtschweißen besonders gut bewährt.

Gemäß einer vorteilhaften Weiterbildung wird vorgeschlagen, dass bei einer Ausführung der Filterlage mit einer reduzierten Lagendicke in dem mindestens einen Randbereich die zu dem mindestens einen Randbereich benachbart angeordnete Zone einer Lage, insbesondere einer strukturierten Blechfolie, eine gegenüber einer (ihrer) Restzone größere Höhe hat. Für den Fall, dass die benachbarte Lage eine strukturierte Blechfolie ist, ist es besonders vorteilhaft, diese in der Zone mit einer gegenüber der Restzone größeren Strukturhöhe auszuführen, wobei eine Materialstärke der Blechfolie bevorzugt in den verschiedenen Zonen gleich ist. Im Gegensatz zu dem zuvor beschriebenen Prinzip, gemäß dem eine Kompensation der unterschiedlichen Lagendicken durch die Filterlage selbst erfolgt, wird hier vorgeschlagen, die Kompensation durch der Filterlage benachbart angeordneten Komponenten durchzuführen.

Wie bereits erläutert, dient die Struktur der Blechfolie primär als Abstandshalter der benachbarten Filterlagen. Bei eine Ausgestaltung der Filterlagen mit unterschiedlichen Strukturhöhen werden demnach auch unterschiedliche Abstände der benachbarten Filterlagen zueinander überbrückt. Bei einer größeren Ausgestaltung der Strukturhöhe in der benachbart zu dem mindestens einen Randbereich angeordneten Zone gegenüber der benachbart zu dem Filterabschnitt angeordneten Restzone wird sichergestellt, dass die Blechfolie über die gesamte Länge der Kanäle einen Kontakt mit benachbarten Filterlagen aufweist, wodurch eine fügetechnische Verbindung dieser Komponenten miteinander (gerade in dem mindestens einen Randbereich) ermöglicht wird. Demnach ist die Vergrößerung der Strukturhöhe zu einem ähnlichen Prozentsatz vorzunehmen, wie eine Reduzierung der Lagendicke beim Übergang von dem mindestens einen Filterabschnitt hin zu dem mindestens einen Randbereich vorliegt.

Gemäß noch einer weiteren Ausgestaltung ist der Filterkörper mit mindestens einer zusätzlichen Ausgleichslage versehen, welche bevorzugt benachbart zu dem mindestens einen Randbereich der Filterlage mit reduzierter Lagendicke angeordnet ist. Diese zusätzlichen Ausgleichslagen erstrecken sich folglich nicht über die gesamte Länge des Filterkörpers, sondern bevorzugt nur im wesentlichen über den Verbindungsabschnitt, in dem die benachbarten Komponenten des Filterkörpers miteinander verbunden werden. Die Ausgleichslage füllt dabei im wesentlichen den aufgrund der reduzierten Lagendicke der Filterlage in dem mindestens einen Randbereich generierten Spalt aus und ist bevorzugt ebenfalls mit den benachbarten Komponenten fügetechnisch verbunden, insbesondere verlötet. Unter Umständen ist es auch möglich, die zusätzliche Ausgleichslage länger als den mindestens einen Randbereich auszuführen, wobei diese zumindest teilweise über die Filterlage bzw. die mindestens eine Blechfolie hinausragt. Dieser hervorstehende Teilbereich kann ggf. auch um einen Randbereich der Filterlage herum angeordnet sein, so dass zwei zu einem Randbereich der Filterlage nahe der Kante angeordnete Spalte mit einer Ausgleichslage kompensiert werden können. Auf diese Weise werden die Kanten der Filterlage, welche besonders hohen dynamischen Belastungen ausgesetzt sind, weiter geschützt werden, wobei die Anzahl der zusätzlich zu integrierenden Ausgleichslagen in dem Filterkörper reduziert werden.

Gemäß einem weiteren Aspekt der Erfindung wird ein Verfahren zur Herstellung eines oben beschriebenen Filterkörpers vorgeschlagen, welches die folgenden Schritte umfasst:
- Herstellen mindestens einer hitzebeständigen Filterlage;
- Ausbilden mindestens eines Randbereichs der mindestens einen Filteranlage mit reduzierter Lagendicke;
- Vorsehen von Mitteln zur Kompensation der verschiedenen Lagendicken der mindestens einen Filterlage;
- Stapeln und/oder Wickeln von mindestens einer Filterlage und mindestens einer strukturierten Blechfolie zur Bildung eines Wabenkörpers mit für ein Abgas durchströmbaren Kanälen;
- Zuführen von Lotmittel in mindestens einen Verbindungsabschnitt der mindestens einen Filterlage mit der mindestens einen Blechfolie; und
- Erhitzen des Wabenkörpers zur Ausbildung von Lotverbindungen in dem mindestens einen Verbindungsabschnitt.

Bezüglich der Ausbildung von Lotverbindungen sei auf die bereits bekannten Techniken zur Herstellung von metallischen Wabenkörpern als Katalysator-Trägerkörper für mobile Abgassysteme von Automobilen verwiesen. Insofern werden als Lotmittel bevorzugt pulverförmige Lote auf Nickel-Basis verwendet, wobei das Erhitzen des Wabenkörpers bevorzugt in einer Schutzgasatmosphäre bzw. einem nahezu vollständigen Vakuum durchgeführt wird.

Gemäß einer weiteren Ausgestaltung des Verfahrens wird der Wabenkörper vor dem Zufuhren von Lotmittel in ein Gehäuse eingeführt, wobei dieses während dem Zuführen bevorzugt auch in wenigstens einem Anbindungsbereich der mindestens einen Filterlage und/oder der mindestens einen Blechfolie mit dem Gehäuse haften bleibt, so dass beim Erhitzen in dem wenigstens einen Anbindungsbereich ebenfalls Lotverbindungen generiert werden. Dazu werden in bekannter Weise der Verbindungsabschnitt und der Anbindungsbereich zunächst mit einem Haftmittel versehen, an welchem das pulverförmige Lot während des Belotungsvorgangs haftet. Zur Begrenzung des Verbindungsabschnitts und/oder des Anbindungsbereiches sind ebenfalls den Lotmittelfluß begrenzende Mittel (Lotstopp, Öl, Wachs, keramische Beschichtung od. dgl.) bekannt, die auch hier ggf. eingesetzt werden können. Die Einbringung des Wabenkörpers in ein Gehäuse vor dem Beloten hat zur Folge, dass mehrere Belotungsschritte vermieden und gleichmäßige Lotverbindungen hergestellt werden, da diese der gleichen thermischen Behandlung ausgesetzt sind.

Gemäß einer Weiterbildung des Verfahrens wird die Ausbildung des mindestens einen Randbereichs mit reduzierter Lagendicke durch die Ausübung einer Presskraft auf die Filterlage in dem mindestens einen Randbereich durchgeführt. Diese Presskraft kann beispielsweise mittels einer Walze od. dgl. erzeugt werden, wobei diese Walze die Filterlage gegen eine Matrize od. dgl. drückt, wobei eine Verdichtung primär des Filtermaterials erfolgt. Dabei ist es auch möglich, diese Presskraft beispielsweise parallel während eines Schweißprozesses auszuüben. Wird beispielsweise eine Ausgestaltung der Filterlage mit umgeformtem Randbereich gewählt, so kann die Filterlage in dem Randbereich zunächst umgeformt und anschließend mittels des Rollnahtschweißens verdichtet und gleichzeitig miteinander verschweißt werden.

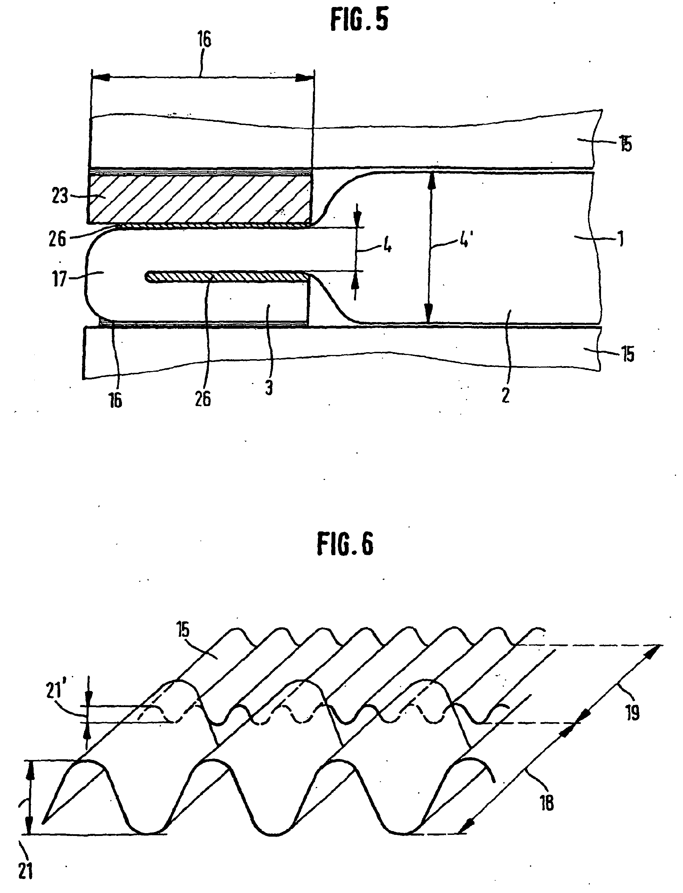

Weiter wird vorgeschlagen, die Mittel zur Kompensation durch das Umformen des mindestens einen Randbereiches der Filterlage zu bewirken. Dieses Mittel wurde bereits oben näher erläutert, und eine weitere, detailliertere Beschreibung erfolgt mit Bezug auf die Fig. 5.

Gemäß noch einer weiteren Ausgestaltung des Verfahrens werden die Mittel zur Kompensation durch das Anordnen von mindestens einer Ausgleichslage zwischen einer Filterlage und einer benachbarten Folie bewirkt. Auch dieser Verfahrensschritt wurde bereits oben erläutert und soll nachfolgend mit Bezug auf Fig. 5 näher beschrieben werden.

Die Erfindung sowie das technische Umfeld werden nun anhand der Figuren näher erläutert, welche besonders vorteilhafte und besonders bevorzugte Ausgestaltungen der erfindungsgemäßen hitzebeständigen Filterlage bzw. des Filterkörpers zeigen. Weiterhin diesen die Figuren zur Veranschaulichung des beschriebenen erfindungsgemäßen Verfahrens. Dennoch sei an dieser Stelle klargestellt, dass die Erfindung nicht auf die in den Figuren dargestellten Ausführungsbeispiele begrenzt ist.

Es zeigen:
- Fig. 1: schematisch und perspektivisch eine erste Ausführungsform der erfindungsgemäßen hitzebeständigen Filterlage,
- Fig. 2: eine Seitenansicht einer Filterlage als Sandwich-Struktur,
- Fig. 3: schematisch eine Abgasanlage,
- Fig.4: schematisch und perspektivisch eine Detailansicht einer Ausführungsform des erfindungsgemäßen Filterkörpers,
- Fig. 5: schematisch eine Detailansicht einer weiteren Ausführungsform des Filterkörpers,
- Fig.6: schematisch und perspektivisch eine Ausführungsform einer Blechfolie zur Kompensation der unterschiedlichen Lagendicken der Filterlage,
- Fig.7: schematisch und perspektivisch eine Ausführungsform des Filterkörpers, und
- Fig.8: schematisch den Ablauf einer Ausgestaltung des erfindungsgemäßen Verfahrens zur Herstellung eines Filterkörpers.

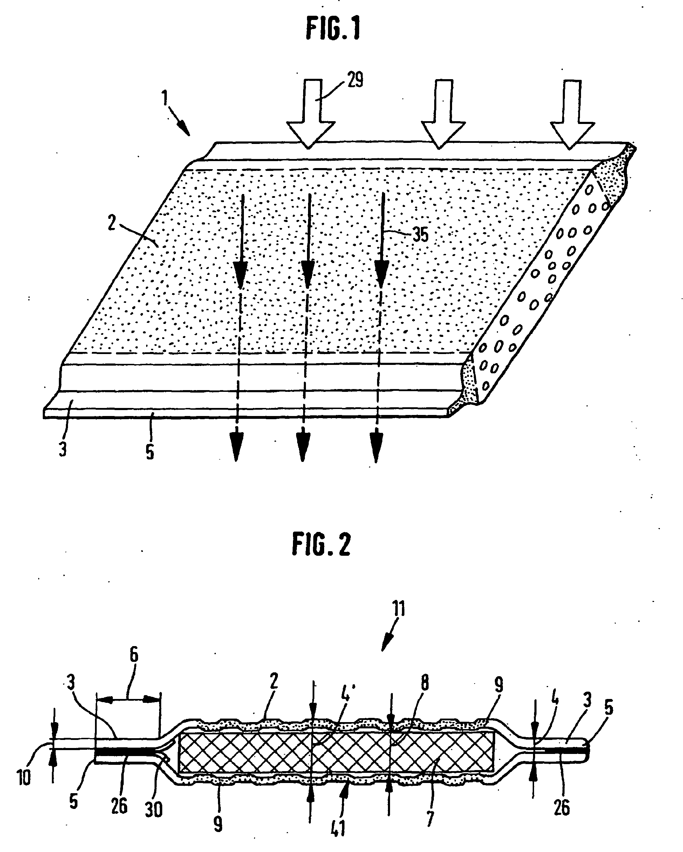

Fig. 1 zeigt schematisch und perspektivisch eine Ausführungsform der erfindungsgemäßen Filterlage 1, die zumindest in einem Filterabschnitt 2 für ein Fluid durchströmbar ist (angedeutet durch die Strömungsrichtung 35). Die Filterlage 1 sind zumindest teilweise aus einem porösem Material aufgebaut (siehe gepunkteter Filterbereich 2) und weist zwei Randbereiche 3 nahe gegenüberliegenden Kanten 5 auf. Die Randbereiche 3 sind durch eine Presskraft 29 (angedeutet durch die Pfeile) komprimiert worden, so dass diese eine gegenüber dem Filterabschnitt 2 reduzierte Lagendicke 4 aufweisen. Die Komprimierung wird durch die im Schnitt dargestellten Poren bzw. Hohlräume signalisiert, die in den Randbereichen 3 deutlich kleiner dargestellt sind als in dem Filterabschnitt 2.

Fig. 2 zeigt schematisch und in einer nicht erfindungsgemäß Schnittansicht eine als Sandwich-Struktur 11 ausgeführte Filterlage 1, wobei diese zwei Metallschichten 9 aufweist, welche eine Hülle um eine Faserschicht 7 bilden. Die Metallschichten 9 haben jeweils zwei Randbereiche 3, wobei die Metallschichten 9 in den Randbereichen 3 miteinander fügetechnisch verbunden sind. Die fügetechnische Verbindung wird hier mittels eines Lotmittels 26 sichergestellt, wobei außerhalb des Randbereichs 3 ein Lotstopp 30 vorgesehen ist, welches verhindert, dass das Lotmittel 26 während einer thermischen Behandlung in die Nähe der Faserschicht 7 gelangt Der Randbereich 3 erstreckt sich von einer Kante 5 der Metallschicht 9 über eine Randbreite 6 hin, die vorzugsweise zwischen 3 und 15 mm beträgt. Bezüglich der Materialdicken lässt sich anhand Fig. 2 erläutern, dass die Metallschichten 9 beispielsweise als Metallfolien ausgeführt sind, und eine Metallschichtdicke 10 aufweisen, die kleiner 0,04 mm ist. Weiter lässt sich erkennen, dass die Faserschicht 7 eine Faserschichtdicke 8 hat. Diese liegt bevorzugt im Bereich von 0,01 mm bis 1 mm.

Aus der Fig. 2 lässt sich eine Metallschicht 7 erkennen, welche mit Strömungsleitflächen 41 versehen ist. Diese ist insbesondere als Mikrostruktur ausgebildet. Bei der dargestellten Ausführungsform werden mit dieser Mikrostruktur bzw. den Strömungsleitflächen 41 zwei Funktionen erfüllt. Einerseits wird das vorbeiströmende Abgas umgelenkt bzw. verwirbelt, so dass Teilgasströme zur benachbarten porösen Wand, insbesondere einer erfindungsgemäßen Filterlage, hin abgelenkt werden bzw. diese durchdringen. Weiterhin lässt sich erkennen, dass mit einer solchen Mikrostruktur auch eine Klemmwirkung in Bezug auf die innenliegende Faserschicht 7 bewirkt wird. Dies verbessert die Stabilität der Filterlage 1. Außerdem ermöglicht dies, dass die Porosität der Metallschichten 9 erhöht werden kann, da die zusätzlich eingeleiteten Klemmkräfte bereits mögliche Auflösungserscheinungen der Faserschicht 7 ausreichend verhindern. Die in Fig. 2 als Sandwich-Struktur 11 ausgeführte Filterlage 1 hat zwei Lagendicken 4, 4', wobei die Lagendicke 4 im Bereich des Randbereiches 3 deutlich dünner als die Lagendicke 4' in dem Bereich des Filterabschnittes 2 ausgeführt ist. Hier ist eine besondere Ausführungsform dargestellt, da sich die Faserschicht 7 nicht bis in die Randbereiche 3 hinein erstreckt.

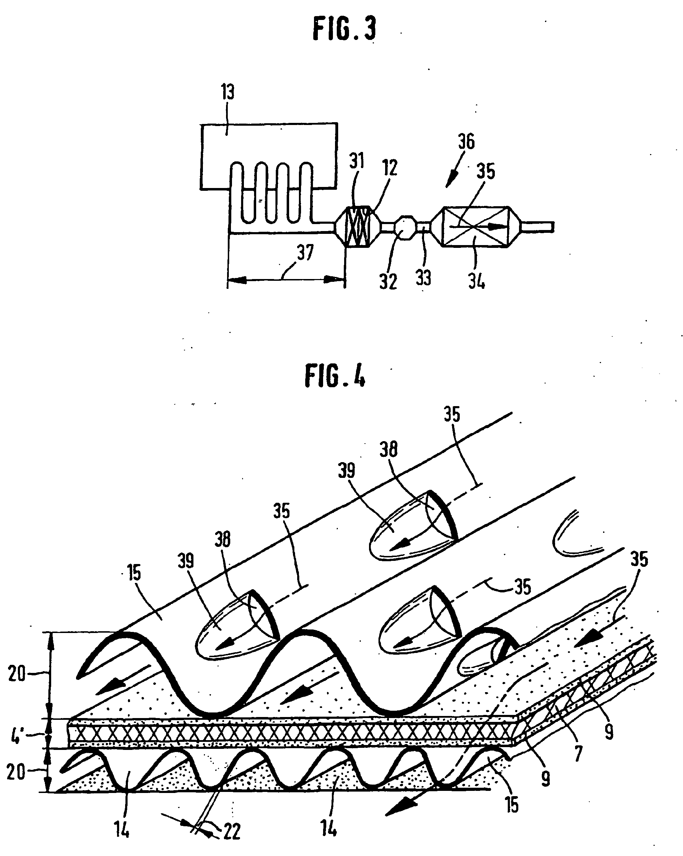

Fig. 3 zeigt schematisch den Aufbau eines Abgassystems 36 für eine Verbrennungskraftmaschine 13. Eine solche Verbrennungskraftmaschine 13 ist bevorzugt als Dieselmotor ausgeführt. Das Abgassystem 36 umfasst in Strömungsrichtung 35 des Abgases folgende Komponenten:
- einen stromaufwärts angeordneten Oxidationskatalysator 31,
- einen erfindungsgemäßen Filterkörper 12,
- einen Turbolader 32, und
- einen weiteren katalytischen Konverter 34.

Die einzelnen Komponenten können in getrennten Gehäusen oder teilweise gemeinsamen miteinander in einem Gehäuse angeordnet sein und sind über eine Abgasleitung 33 miteinander verbunden. Wie bereits in der Einleitung ausgeführt, ist es besonders vorteilhaft, den Filterkörper 12 möglichst nahe an der Verbrennungskraftmaschine 13 anzuordnen. Insbesondere eignet sich hierzu ein Abstand 37 von der Verbrennungskraftmaschine 13, der kleiner 0,7 m beträgt, insbesondere sogar kleiner 30 cm ist. Bei einer solchen Anordnung der einzelnen Komponenten wird zunächst mit Hilfe des Oxidationskatalysators 31 eine ausreichende Menge von Stickstoffdioxid zur Verfugung gestellt, der im direkt nachgeschalteten Filterkörper 12 eine Regenerierung (kontinuierlich) der eingelagerten Rußpartikel sicherstellt. Der nachgeschaltete katalytische Konverter 34 kann beispielsweise auch als Hybrid-Konverter ausgeführt sein, wobei dieser Teilbereiche mit unterschiedlicher Wärmekapazität aufweist. Dabei ist dieser so auszulegen, dass er in Strömungsrichtung eine zunehmende Wärmekapazität hat.

Fig. 4 zeigt schematisch und perspektivisch eine weitere Ausführungsform des erfindungsgemäßen Filterkörpers 12. Der Filterkörper 12 umfasst hierbei Blechfolien 15, zwischen die jeweils eine erfindungsgemäße Filterlage 1 angeordnet ist. In der dargestellten Ausführungsform ist die Filterlage 1 mit zwei Metallschichten 9 und einer dazwischen angeordneten Faserschicht 7 gebildet, wobei die fügetechnische Verbindung in dem Randbereich aufgrund der Schnittdarstellung nicht erkennbar ist. In dem dargestellten Ausschnitt ist die Filterlage 1 nur in dem Filterabschnitt 2 dargestellt, so dass hier auch lediglich die Lagendicke 4' erkennbar ist.

Die Blechfolien 15 haben eine konstante Materialstärke 22 und sind hier mit einer Struktur versehen, während die Filterlage 1 eine im wesentlichen glatte Oberfläche aufweist. Mit Hilfe dieser Struktur der Blechfolien 15 werden Kanäle 14 gebildet, die für ein Abgas in einer Strömungsrichtung 35 durchströmbar sind. Die Blechfolien 15 weisen hier unterschiedliche Höhen 20 der Struktur auf, so dass die gebildeten Kanäle 14 auf die Charakteristik des anströmenden Abgasstromes abgestimmt sind. Die hier dargestellte Ausführungsform zeigt im wesentlichen ein Detail eines offenen Filterkörpers. Diese Eigenschaft wird dadurch beschrieben, dass eine Strömungsfreiheit von mindestens 20 % gegeben ist. Strömungsfreiheit bedeutet in diesem Zusammenhang, dass in jedem beliebigen Querschnitt mindestens 20 % der Fläche durchschaubar sind, das heißt frei von Einbauten wie Umlenkflächen 39 oder dergleichen. Das heißt mit anderen Worten auch, dass bei einer stirnseitigen Ansicht eines solchen Partikelfilters zumindest teilweise durch die Kanäle hindurchgeschaut werden kann, sofern die Einbauten alle etwa die gleiche Einbaulage haben, also fluchtend angeordnet hintereinander sind. Dies ist bei Wabenkörpern aus zumindest teilweise strukturierten Blechlagen typischerweise gegeben. Die Strömungsfreiheit bedeutet aber für nicht miteinander fluchtende Einbauten nicht zwingend, dass man tatsächlich teilweise durch einen solchen Wabenkörper hindurchschauen kann. Die Blechfolien 15 sind mit Durchlässen 38 und Umlenkflächen 39 versehen, die eine Umlenkung des Abgasstromes hin zur Filterlage 1 gewährleisten. Dabei werden Druckunterschiede erzeugt, die zur Folge haben, dass Teilabgasströme die Filterlage 1 durchdringen und damit eine Anhaftung bzw. Ablagerung von Rußpartikeln oder ähnlichem in der Faserschicht 7 erfolgt.

Fig. 5 zeigt schematisch eine Detailansicht einer weiteren Ausführungsform des Filterkörpers 12, wobei zwischen zwei Blechfolien 15 eine erfindungsgemäße Filterlage 1 angeordnet ist. Die Filterlage 1 weist wiederum zwei Lagendicken 4, 4' auf, wobei die Lagendicke 4 im Randbereich 3 dünner ausgeführt ist als in dem Filterabschnitt 2. Die Blechlagen 15 sind in einem Verbindungsabschnitt 16 direkt oder über eine Ausgleichslage 23, die hier in dem Randbereich 3 bzw. dem Verbindungsbereich 16 zusätzlich angeordnet ist, mit der Filterlage 1 verbunden, insbesondere verlötet (mit Lotmittel 26). Dabei schließen die Blechfolien 15, die Ausgleichslage 23 und die Filterlage 1 stirnseitig bündig ab. Der dargestellte dünne Randbereich 3 der Filterlage 1 ist im wesentlichen doppelt so lang ausgeführt als der Verbindungsabschnitt 16, wobei ein Umformbereich 17 gebildet wurde, so dass sich der Randbereich 3 zumindest teilweise selbst überlappt. Die sich überlappenden Teilbereiche des Randbereiches 3 liegen nun aneinander an und sind miteinander sogar verlötet.

Aufgrund der Tatsache, dass die Lagendicke 4 in der dargestellten Ausführungsform etwa 1/3 der Lagendicke 4' in dem Filterabschnitt entspricht, wird durch das Umbiegen bzw. Falzen des Randbereiches 3 erreicht, das die Filterlage 1 zumindest zu einer Seite hin mit der benachbart angeordneten Blechlage 15 direkt verbindbar ist. Insofern füllt der Randbereich 3 nun ein 2/3 der Lagendicke 4' aus, so dass die zusätzliche Ausgleichslage 23 nun das restliche Drittel überbrückt und eine indirekte Verbindung der Filterlage 1 mit der gegenüberliegenden Blechfolie 15 vorliegt. Alternativ zu einer solchen Ausführungsform ist es ebenfalls möglich, den (ungeformten) Randbereich 3 zu beiden Seiten hin mit einer Ausgleichslage 23 indirekt mit den benachbarten Blechfolien 15 zu verbinden, wobei dann die Ausgleichslage 23 bevorzugt mit einem Umformbereich ausgeführt ist, so dass dieser Umformbereich über das stimseitige Ende des Randbereiches 3 herumragt und eine Ausgleichslage 23 dann gleichzeitig beide Abstände des Randbereiches 3 hin zu den Blechfolien 15 ausfüllt.

Fig. 6 zeigt schematisch und perspektivisch eine Ausführungsform einer Blechfolie 15 zur Kompensation der unterschiedlichen Lagendicken 4, 4' der Filterlage 1 (nicht dargestellt). Die strukturierte Blechfolie 15 wird in der bereits erläuterten Art und Weise zu der Filterlage 1 benachbart angeordnet und dient zur Kompensation deren unterschiedlicher Lagendicken. Zu diesem Zweck hat die Blechfolie 15 in der Zone 18 eine gegenüber der Restzone 19 größere Strukturhöhe 21, wobei eine Materialstärke 22 (nicht dargestellt) der Blechfolie 15 bevorzugt in den verschiedenen Zonen 18, 19 gleich ist. Die Zone 18 mit der Strukturhöhe 21 ist demnach in dem Umfang zu vergrößerten, dass eine Anlage der Metallfolie 15 in der Zone 18 bzw. dem Randbereich 3 der Filterlage 1 sichergestellt ist. Geht man beispielsweise von einer Ausführungsform der Filterlage 1 wie in Fig. 5 gezeigt aus, so ist es vorteilhaft, dass die Strukturhöhe 21 in der Zone 18 etwa um einen Betrag größer als die Strukturhöhe 21' ist, der im wesentlichen der Differenz aus der Lagendicke 4' und der Lagendicke 4 entspricht. Für diesen Fall kann vorteilhafterweise auf zusätzliche Ausgleichslagen verzichtet werden.

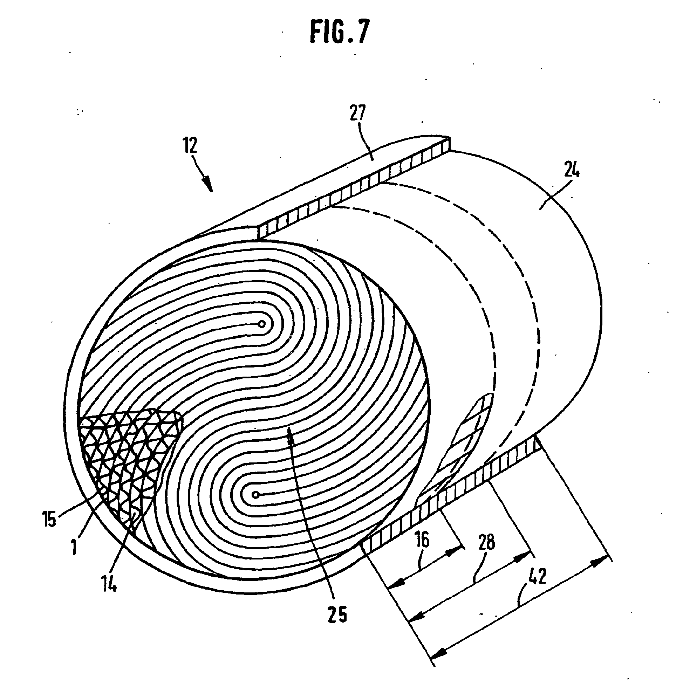

Fig. 7 zeigt schematisch und perspektivisch eine Ausführungsform des Filterkörpers 12, der einen in einem Gehäuse 27 angeordneten Wabenkörper 24 umfasst. Der Wabenkörper 24 ist mit einer Mehrzahl abwechselnd angeordneten Filterlagen 1 und strukturierten Blechfolien 15 gebildet, die zunächst gestapelt und dann miteinander so gewunden wurden, dass eine im wesentlichen zylindrische Gestalt des Wabenkörpers 24 gegeben ist. Alternativ hierzu sind auch konusförmige, rechteckige oder ovale Gestalten herstellbar, wobei auch jeweils nur eine Blechfolie 15 und eine Filterlage 1 vorgesehen sein kann, welche insbesondere gemeinsam spiralig aufgewickelt sind. Die strukturierten Blechfolien 15 und die Filterlagen 1 begrenzen für ein Abgas durchströmbare Kanäle 14, die sich von einer Stirnfläche 25 bis zur gegenüberliegenden Stirnfläche 25 hin erstrecken. Dabei ist sichergestellt, dass man zumindest teilweise durch diese Kanäle 14 hindurchschauen kann. Dies ist mit der eingangs erläuterten Strömungsfreiheit von mindestens 20 % gewährleistet.

Die strukturierten Blechfolien 15 und die Filterlagen 1 sind miteinander in einem Verbindungsabschnitt 16 fügetechnisch verbunden, insbesondere verlötet (bevorzugt hochtemperatur-vakuum-verlötet). Zusätzlich erfolgt eine Anbindung des Wabenkörpers 24 mit dem Gehäuse 27 in mindestens einem Anbindungsbereich 28, wobei hier bevorzugt (gleichzeitig) das gleiche fügetechnische Verfahren zum Einsatz gelangt, wie bei der Verbindung der Blechfolien 15 und der Filterlagen 1 miteinander. Die Anbindung als auch die Verbindungen sind nicht über die gesamte Länge 42 des Wabenkörpers ausgeführt, so dass auch unter thermischer Belastung Differentdehnungen infolge des unterschiedlichen Ausdehnungsverhaltens der Komponenten möglich sind. Dies hat zur Folge, dass in dem Wabenkörper 24 bzw. zwischen Wabenkörper 24 und Gehäuse 27 keine Spannungen entstehen, die zu einem frühzeitigen Verlust der strukturellen Integrität des Filterkörpers führen würde.

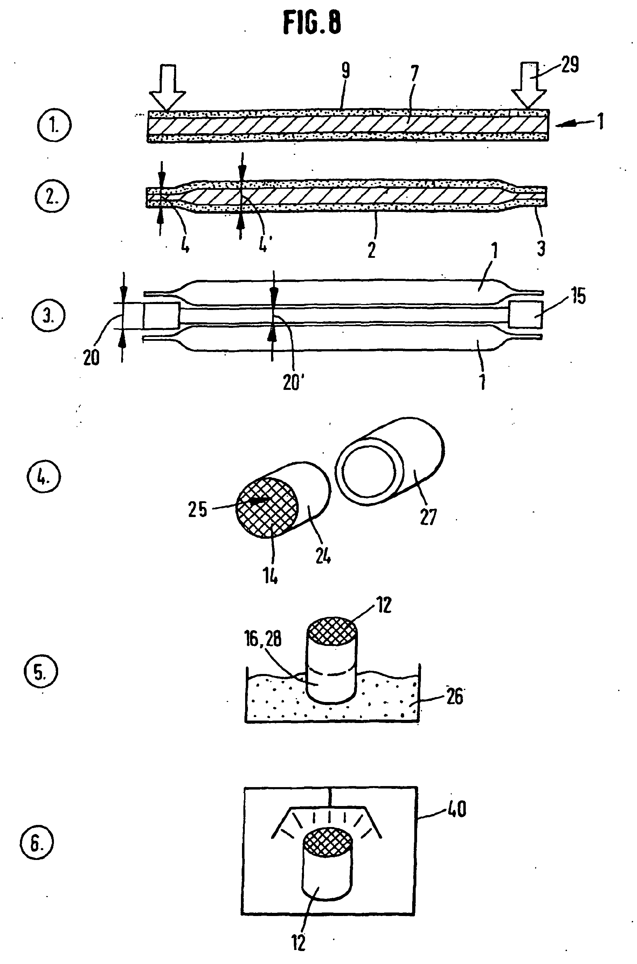

Fig. 8 stellt schematisch den Ablauf einer Ausgestaltung des erfindungsgemäßen Verfahrens zur Herstellung eines Filterkörpers 12 dar. Dieses Verfahren umfasst die folgenden Schritte:
a) Herstellen mindestens einer hitzebeständigen Filterlage 1:
   Gemäß dem Schritt 1. wird die Filterlage 1 so hergestellt, dass einer zentralen Faserschicht 7 zwei Metallschichten 9 zugeordnet werden, welche die Faserschicht 7 nach außen hin begrenzen, so dass eine Art Schutzhülle gebildet ist (vgl. Sändwich-Struktur). Die Filterlage 1 wird dabei bevorzugt aus bandähnlichen bzw. folienähnlichen Rohmaterialen (Bleche, Gewebe, etc.) hergestellt, indem diese auf die gewünschten Maße zurechtgeschnitten werden.
b) Ausbilden mindestens eines Randbereiches 3 der mindestens einen Filterlage 1 mit reduzierter Lagendicke 4:
   Die Ausbildung der zwei gegenüberliegenden Randbereich 3 mit reduzierter Lagendicke 4 erfolgt durch die Ausübung einer Presskraft 29 auf die Filterlage 1 (vgl. Schritt 1.: angedeutet mit Pfeilen) in den Randbereichen 3. Dabei wird zumindest die Faserschicht deutlich komprimiert, so dass diese Randbereiche 3 im wesentlichen für ein Lotmittel undurchdringbar sind (vgl. Schritt 2.). Für einen solchen Komprimierungsprozess eignen sich eine Vielzahl von Fertigungsverfahren, wobei an dieser Stelle beispielhaft das Pressen mit einer Walze genannt sei.
c) Vorsehen von Mitteln zur Kompensation der verschiedenen Lagendicken 4, 4' der mindestens einen Filterlage 1:
   Hierzu bieten sich wie weiter oben erläutert im wesentlichen zwei unterschiedliche Prinzipien an bzw. auch eine Kombination dieser Prinzipien. In der in Schritt 3. dargestellten Ausgestaltung erfolgt die Kompensation der verschiedenen Lagendicken 4, 4' der mindestens einen Filterlage 1 ausschließlich über die zwischen den Filterlagen 1 angeordneten Lagen. Demnach weist die Blechfolie 15 mehrere stirnseitige Zonen mit einer Höhe 20 auf, die größer ausgeführt ist als die Höhe 20' in der zentral bzw. dazwischenliegenden Restzone. Insofern liegen die benachbarten Lagen über die gesamte Länge aneinander an, so dass eine Relativbewegung der Lagen zueinander auch nach der Ausbildung fügetechnischer Verbindungen vermieden wird (wie z.B. Flattern oder Schwingen der Randbereiche der Filterlagen 1).
d) Stapeln und/oder Wickeln von mindestens einer Filterlage 1 und mindestens einer strukturierten Blechfolie 15 zur Bildung eines Wabenkörpers 24 mit für ein Abgas durchströmbaren Kanälen 14:
   Die Blechfolien 15 und die Filterlagen 1 werden nun in der in Schritt 3. dargestellten Weise gestapelt und anschließend zu einem zylindrischen Wabenkörper 24 geformt. Dabei sind die Randbereiche zumindest teilweise in einer Ebene parallel zu einer Stirnfläche 25 des Wabenkörpers 24 anzuordnen, insbesondere grenzen diese alle an wenigstens einer Stirnfläche 25 an. Aufgrund der Struktur der Blechfolien 15 werden Kanäle 14 gebildet, die für ein Abgas durchströmbar sind und eine Strömungsfreiheit von mindestens 20 % sicherstellen. Bzgl. des Wickelprozesses sei auch auf bekannte Techniken verwiesen, die sich zur Herstellung einer metallischen Wabenstruktur als Katalysator-Trägerkörper bereits vielfach bewährt haben. Der Wabenkörper 24 wird nun noch in ein Gehäuse 27 eingeführt (vgl. Schritt 4.), so dass der Wabenkörper 24 und das Gehäuse 27 anschließend gemeinsam mit einem Haftmittel und/oder dem Lotmittel 26 versehen werden können.
e) Zuführen von Lotmittel 26 in mindestens einem Verbindungsabschnitt 16 der mindestens einen Filterlage 1 mit der mindestens einen Blechfolie 15:
   Auch bei diesem Verfahrensschritt sei auf die bekannte Belotungstechnik von metallischen Wabenstrukturen hingewiesen, die z.B. als Katalysator-Trägerkörper in Abgassystemen von Automobilen eingesetzt werden. Neben der Verwendung von festen Lotstreifen oder dergleichen werden hier bevorzugt auch pulverförmige Lotmittel eingesetzt. Dabei wird zunächst in den Kontaktbereichen der miteinander zu verbindenden Lagen ein Haftmittel angelagert, wobei ein so vorbehandelter Filterkörper 12 mit dem pulverförmigen Lotmittel 26 in Kontakt gebracht, welches an dem Haftmittel haften bleibt (vgl. Schritt 5.).
f) Erhitzen des Wabenkörpers 24 zur Ausbildung von Lotverbindungen in dem mindestens einen Verbindungsabschnitt 16:
   Für die Ausbildung von korrosions- und temperaturbeständigen Verbindungen der Lagen miteinander (Verbindungsabschnitt 16) und der Anbindung mit dem Gehäuse 27 (Anbindungsbereich 28) hat sich ein Hochtemperatur-Vakuum-Prozess als besonders gut herausgestellt. Dabei wird der Filterkörper 12 bei Temperaturen bis zu 1200°C in einem Ofen 40 unter Vakuum erhitzt und anschließend wieder abgekühlt. Der Aufheiz- und der Abkühlprozess findet üblicherweise nach einem vorgebbaren Muster ab, der sich mit Temperaturtransienten und Haltezeiten beschreiben lässt.

Der so hergestellte Filterkörper 12 genügt des sehr hohen thermischen und dynamischen Anforderungen beispielsweise in Abgassystemen von Dieselmotoren, wie sie derzeit im Automobilbau verwendet werden. Dies gilt gerade in Hinblick auf eine motornahe Anordnung des Filterkörpers, bei der eine kontinuierliche Regeneration des Filterkörpers erfolgen kann. Diese Ausgestaltung des offenen Filterkörpers bewirkt dabei, dass die Reaktionspartner zur Umsetzung der Rußpartikel sowie diese selbst länger in dem Filterkörper verweilen, so dass die Wahrscheinlichkeit bzgl. des Vorhandenseins aller notwendigen Reaktionspartner und Umgebungsbedingungen gesteigert wird. Tests haben dies bestätigt, wobei beispielsweise eine Filtereffektivität von über 50 % festgestellt werden konnte. Dies bedeutet, dass die meisten derzeit in Verkehr befindlichen Pkws auch in Zukunft die allerstrengsten Abgasrichtlinien bzw. gesetzlichen Verordnungen einhalten können. Insofern ist dieser Filterkörper gerade auch als Nachrüstsatz besonders gut geeignet.

### Bezugszeichenliste

- 1: Filterlage
- 2: Filterabschnitt
- 3: Randbereich
- 4, 4': Lagendicke
- 5: Kante
- 6: Randbreite
- 7: Faserschicht
- 8: Faserschichtdicke
- 9: Metallschicht
- 10: Metallschichtdicke
- 11: Sandwich-Struktur
- 12: Filterkörper
- 13: Verbrennungskraftmaschine
- 14: Kanal
- 15: Blechfolie
- 16: Verbindungsabschnitt
- 17: Umformbereich
- 18: Zone
- 19: Restzone
- 20, 20': Höhe
- 21,21': Strukturhöhe
- 22: Materialstärke
- 23: Ausgleichslage
- 24: Wabenkörper
- 25: Stirnfläche
- 26: Lotmittel
- 27: Gehäuse
- 28: Anbindungsbereich
- 29: Presskraft
- 30: Lotstopp
- 31: Oxidationskatalysator
- 32: Turbolader
- 33: Abgasleitung
- 34: Katalytischer Konverter
- 35: Strömungsrichtung
- 36: Abgassystem
- 37: Abstand
- 38: Durchlass
- 39: Umlenkfläche
- 40: Ofen
- 41: Strömungsleitfläche
- 42: Länge

## Patentansprüche

1. Hitzebeständige Filterlage (1) aus einem zumindest teilweise für ein Fluid durchströmbaren Materialverbund aus Fasern mit wenigstens einem Filterabschnitt (2) und mindestens einem Randbereich (3), **dadurch gekennzeichnet, dass** die Filterlage (1) in dem mindestens einen Randbereich (3) eine von dem mindestens einen Filterabschnitt (2) verschiedene, nämlich kleinere Lagendicke (4) aufweist, wobei diese mit einem komprimierten oder verdichteten Faserverbund gebildet ist.

2. Hitzebeständige Filterlage (1) nach Anspruch 1, **dadurch gekennzeichnet, dass** die Lagendicke (4) in dem mindestens einen Randbereich (3) kleiner als 60% in dem mindestens einen Filterabschnitt (2) ist, , bevorzugt kleiner als 50% oder sogar kleiner als 35%.

3. Hitzebeständige Filterlage (1) nach Anspruch 1 oder 2, **dadurch gekennzeichnet, dass** der mindestens eine Randbereich (3) ausgehend von einer Kante (5) der Filterlage (1) eine Randbreite (6) von höchstens 30 mm hat, insbesondere von höchstens 20 mm, bevorzugt von höchstens 10 mm oder sogar von nur maximal 5 mm.

4. Hitzebeständige Filterlage (1) nach einem der vorhergehenden Ansprüche, **dadurch gekennzeichnet, dass** die Filterlage (1) mindestens eine Faserschicht (7) umfasst, welche vorzugsweise eine Faserschichtdicke (8) von höchstens 3 mm hat, insbesondere von höchstens 1 mm und bevorzugt von maximal 0,5 mm.

5. Hitzebeständige Filterlage (1) nach einem der vorhergehenden Ansprüche, **dadurch gekennzeichnet, dass** die Filterlage (1) wenigstens eine Metallschicht (9) hat, die vorzugsweise die Filterlage (1) nach außen abgrenzt und insbesondere eine Metallschichtdicke (10) von höchstens 0,05 mm aufweist, bevorzugt von höchstens 0,03 mm oder sogar von maximal 0,015 mm.

6. Hitzebeständige Filterlage (1) nach einem der vorhergehenden Ansprüche, **dadurch gekennzeichnet, dass** die Filterlage (1) eine Sandwich-Struktur (11) ist, und mindestens eine Faserschicht (7) und wenigstens eine Metallschicht (9) ausweist.

7. Filterkörper (12) zur Reinigung von Abgasen einer Verbrennungskraftmaschine (13), umfassend zumindest teilweise strukturierte Lagen (1, 15), die so gestapelt und/oder gewickelt sind, dass für das Abgas durchströmbare Kanäle (14) gebildet sind, **dadurch gekennzeichnet, dass** die Lagen zumindest eine hitzebeständige Filterlage (1) nach einem der vorhergehenden Ansprüche umfassen.

8. Filterkörper (12) nach Anspruch 7, **dadurch gekennzeichnet, dass** die Lagen mindestens eine strukturierte Blechfolie (15) und mindesten eine im wesentlichen glatte Filterlage (1) umfassen, wobei die Lagen (1, 15) in wenigstens einem Verbindungsabschnitt (16) miteinander fügetechnisch verbunden sind, insbesondere verlötet oder verschweißt.

9. Filterkörper (12) nach Anspruch 8, **dadurch gekennzeichnet, dass** der wenigstens eine Verbindungsabschnitt (16) in dem mindestens einen Randbereich (3) der Filterlage (1) angeordnet ist.

10. Filterkörper (12) nach einem der Ansprüche 7 bis 9, **dadurch gekennzeichnet, dass** Mittel (17, 18, 19, 20, 21, 23) zur Kompensation der verschiedenen Lagendicken (4, 4') der Filterlage (1) vorhanden sind.

11. Filterkörper (12) nach Anspruch 10, wobei die Lagendicke (4) der Filterlage (1) in dem mindestens einen Randbereich (3) reduziert ausgeführt ist, **dadurch gekennzeichnet, dass** der mindestens eine Randbereich (3) einen Umformbereich (17) hat und sich zumindest teilweise selbst überlappt und bevorzugt sogar verlötet ist.

12. Filterkörper (12) nach Anspruch 10 oder 11, wobei die Lagendicke (4) der Filterlage (1) in dem mindestens einen Randbereich (3) reduziert ausgeführt ist, **dadurch gekennzeichnet, dass** die zu dem mindestens einen Randbereich (3) benachbart angeordnete Zone (18) einer Lage (1, 15), insbesondere einer strukturierten Blechfolie (15), eine gegenüber einer Restzone (19) größere Höhe (20) hat.

13. Filterkörper (12) nach Anspruch 12, wobei die benachbarte Lage eine strukturierte Blechfolie (15) ist, **dadurch gekennzeichnet, dass** diese in der Zone (18) mit einer gegenüber der Restzone (19) größeren Strukturhöhe (21) ausgeführt ist, wobei eine Materialstärke (22) der Blechfolie (15) bevorzugt in den verschiedenen Zonen (18, 19) gleich ist.

14. Filterkörper (12) nach einem der Ansprüche 10 bis 13, **dadurch gekennzeichnet, dass** mindestens eine zusätzliche Ausgleichslage (23) vorgesehen ist, welche bevorzugt benachbart zu dem mindestens einen Randbereich (3) der Filterlage (1) mit reduzierter Lagendicke (4) angeordnet ist.

15. Filterkörper (12) nach einem der Ansprüche 10 bis 14, **dadurch gekennzeichnet, dass** dieser wechselseitig verschlossene Kanäle (14) aufweist.

16. Filterkörper (12) nach einem der Ansprüche 10 bis 14, **dadurch gekennzeichnet, dass** dieser Kanäle (14) mit über die gesamte Länge frei durchströmbarem Querschnitt aufweist, wobei in den Kanälen (14) Mittel zur Erzeugung von Druckunterschieden bzw. Mittel zur Beeinflussung der Strömungsrichtung vorgesehen sind.

17. Verfahren zur Herstellung eines Filterkörpers (12) nach einem der Ansprüche 7 bis 16 umfassend folgende Schritte:
- Herstellen mindestens einer hitzebeständigen Filterlage (1);
- Ausbilden mindestens eines Randbereiches (3) der mindestens einen Filterlage (1) mit reduzierter Lagendicke (4);
- Vorsehen von Mitteln zur Kompensation der verschiedenen Lagendicken (4,4') der mindestens einen Filterlage (1);
- Stapeln und/oder Wickeln von mindestens einer Filterlage (1) und mindestens einer strukturierten Blechfolie (15) zur Bildung eines Wabenkörpers (24) mit für ein Abgas durchströmbaren Kanälen (14);
- Zuführen von Lotmittel (26) in mindestens einem Verbindungsabschnitt (16) der mindestens einen Filterlage (1) mit der mindestens einen Blechfolie (15); und
- Erhitzen des Wabenkörpers (24) zur Ausbildung von Lotverbindungen in dem mindestens einen Verbindungsabschnitt (16).

18. Verfahren nach Anspruch 17, bei dem der Wabenkörper (24) vor dem Zuführen von Lotmittel (26) in ein Gehäuse (27) eingeführt wird, und während dem Zuführen von Lotmittel (26) dieses bevorzugt auch in wenigstens einen Anbindungsbereich (28) der mindestens einen Filterlage (1) und/oder der mindestens einen Blechfolie (15) mit dem Gehäuse (27) angeordnet wird, so dass beim Erhitzen in dem wenigstens einen Anbindungsbereich (28) Lotverbindungen generiert werden.

19. Verfahren nach Anspruch 17 oder 18, bei dem die Ausbildung des mindestens einen Randbereiches (3) mit reduzierter Lagendicke (4) durch die Ausübung einer Presskraft (29) auf die Filterlage (1) in dem mindestens einen Randbereich (3) erfolgt.

20. Verfahren nach einem der Ansprüche 17 bis 19, bei dem die Mittel zur Kompensation durch das Umformen des mindestens einen Randbereiches (3) bewirkt werden.

21. Verfahren nach einem der Ansprüche 17 bis 20, bei dem die Mittel zur Kompensation durch das Anordnen von mindestens einer Ausgleichslage (23) zwischen einer Filterlage (1) und einer benachbarten Blechfolie (15) bewirkt werden.

## Claims

1. A heat-resistant filter layer (1) made from a material assembly of fibers which is at least partially pervious to a fluid, having at least one filter section (2) and at least one boundary region (3), **characterized in that** the filter layer (1) has a different, namely a reduced layer thickness (4) in the at least one boundary region (3) than in the at least one filter section (2), wherein this is realized with a fiber assembly being compressed or compacted.

2. The heat-resistant filter layer (1) as claimed in claim 1, **characterized in that** the layer thickness (4) in the at least one boundary region (3) is less than 60% in the at least one filter section (2), preferably less than 50%, or even less than 35%.

3. The heat-resistant filter layer (1) as claimed in claim 1 or 2, **characterized in that** the at least one boundary region (3), starting from an edge (5) of the filter layer (1), has a boundary width (6) of at most 30 mm, in particular of at most 20 mm, preferably of at most 10 mm or even of only at most 5 mm.

4. The heat-resistant filter layer (1) as claimed in one of the preceding claims, **characterized in that** the filter layer (1) comprises at least one fiber layer (7) which preferably has a fiber layer thickness (8) of at most 3 mm, in particular of at most 1 mm and preferably of at most 0.5 mm.

5. The heat-resistant filter layer (1) as claimed in one of the preceding claims, **characterized in that** the filter layer (1) has at least one metal layer (9), which preferably limits the filter layer (1) on the outside and in particular has a metal-layer thickness (10) of at most 0.05 mm, preferably of at most 0.03 mm or even at most 0.015 mm.

6. The heat-resistant filter layer (1) as claimed in one of the preceding claims, **characterized in that** the filter layer (1) is a sandwich structure (11) and has at least one fiber layer (7) and at least one metal layer (9).

7. A filter body (12) for purifying exhaust gases from an internal combustion engine (13), comprising at least partially structured layers (1, 15), which are stacked and/or wound in such a way as to form passages (14) through which the exhaust gas can flow, **characterized in that** the layers comprise at least one heat-resistant filter layer (1) as claimed in one of the preceding claims.

8. The filter body (12) as claimed in claim 7, **characterized in that** the layers comprise at least one structured sheet-metal foil (15) and at least one substantially smooth filter layer (1), the layers (1, 15) being connected to one another by joining, in particular by soldering or welding, in at least one connecting section (16).

9. The filter body (12) as claimed in claim 8, **characterized in that** the at least one connecting section (16) is arranged in the at least one boundary region (3) of the filter layer (1).

10. The filter body (12) as claimed in one of claims 7 to 9, **characterized in that** there are means (17, 18, 19, 20, 21, 23) for compensating for the different layer thicknesses (4, 4') of the filter layer (1).

11. The filter body (12) as claimed in claim 10, in which the layer thickness (4) of the filter layer (1) is reduced in the at least one boundary region (3), **characterized in that** the at least one boundary region (3) has a deformation region (17) and at least partially overlaps itself and is preferably even soldered together.

12. The filter body as claimed in claim 10 or 11, in which the layer thickness (4) of the filter layer (1) is reduced in the at least one boundary region (3), **characterized in that** the zone (18) of a layer (1, 15), in particular of a structured sheet-metal foil (15), which is arranged adjacent to the at least one boundary region (3), has a greater height (20) than a remaining zone (19).

13. The filter body (12) as claimed in claim 12, in which the adjacent layer is a structured sheet-metal foil (15), **characterized in that** the latter is formed in the zone (18) with a structure height (21) which is greater than that of the remaining zone (19), wherein a material thickness (22) of the sheet-metal foil (15) is preferably being equaled in the various zones (18, 19).

14. The filter body (12) as claimed in one of claims 10 to 13, **characterized in that** there is at least one additional compensation layer (23), which is preferably arranged adjacent to the at least one boundary region (3) of the filter layer (1) of reduced layer thickness (4).

15. The filter body (12) as claimed in one of claims 10 to 14, **characterized in that** said filter body (12) comprises alternately closed passages (14).

16. The filter body (12) as claimed in one of claims 10 to 14, **characterized in that** said filter body (12) comprises passages (14) having a cross section through which a fluid can flow freely over the entire length of said passage (14), wherein means for generating pressure differences and means for influencing the direction of flow are provided respectively in said passages (14).

17. A process for producing the filter body (12) as claimed in one of claims 7 to 16, comprising the following steps:
- production of at least one heat-resistant filter layer (1);
- formation of at least one boundary region (3) of the at least one filter layer (1) of reduced layer thickness (4);
- provision of means for compensating for the different layer thicknesses (4, 4') of the at least one filter layer (1);
- stacking and/or winding of at least one filter layer (1) and at least one structured sheet- metal foil (15) so as to form a honeycomb body (24) with passages (14) through which an exhaust gas can flow;
- supplying solder (26) in at least one connecting section (16) with the at least one filter layer (1) and the at least one sheet-metal foil (15); and
- heating of the honeycomb body (24) in order to form solder joints in the at least one connecting section (16).

18. The process as claimed in claim 17, in which the honeycomb body (24) is introduced into a casing (27) before solder (26) is supplied, and while solder (26) is being supplied, the latter is preferably also arranged in at least one attachment region (28) for attaching the at least one filter layer (1) and/or the at least one sheet-metal foil (15) to the casing (27), so that solder joints are generated during heating in the at least one attachment region (28).

19. The process as claimed in claim 17 or 18, in which the at least one boundary region (3) of reduced layer thickness (4) is formed by the application of a compressive force (29) to the filter layer (1) in the at least one boundary region (3).

20. The process as claimed in one of claims 17 to 19, in which the compensation means are produced by the deformation of the at least one boundary region (3).

21. The process as claimed in one of claims 17 to 20, in which the compensation means are produced by arranging at least one compensation layer (23) between a filter layer (1) and an adjacent sheet-metal foil (15).

## Revendications

1. Couche de filtre résistante à la chaleur (1) d'un composite de matériau de fibres, pouvant être traversé au moins partiellement par un fluide, avec au moins une section de filtre (2) et au moins une région de bord (3), **caractérisée en ce que** la couche de filtre (1) a dans l'au moins une région de bord (3) une épaisseur de couche (4) différente de, à savoir plus petite que l'au moins une section de filtre (2), laquelle épaisseur de couche (4) est formée avec un composite de fibres comprimé ou densifié.

2. Couche de filtre résistante à la chaleur (1) selon la revendication 1, **caractérisée en ce que** l'épaisseur de couche (4) dans l'au moins une région de bord (3) est plus petite que 60 % dans l'au moins une section de filtre (2), de préférence plus petite que 50 % ou même plus petite que 35 %.

3. Couche de filtre résistante à la chaleur (1) selon la revendication 1 ou 2, **caractérisée en ce qu'**en partant d'une arête (5) de la couche de filtre (1), l'au moins une région de bord (3) a une largeur de bord (6) de tout au plus 30 mm, notamment de tout au plus 20 mm, de préférence de tout au plus 10 mm ou même que 5 mm au maximum.

4. Couche de filtre résistante à la chaleur (1) selon l'une des revendications précédentes, **caractérisée en ce que** la couche de filtre (1) comporte au moins une couche fibreuse (7) qui a de préférence une épaisseur de couche fibreuse (8) de tout au plus 3 mm, notamment de tout au plus 1 mm et de préférence de maximalement 0,5 mm.

5. Couche de filtre résistante à la chaleur (1) selon l'une des revendications précédentes, **caractérisée en ce que** la couche de filtre (1) a au moins une couche métallique (9) qui délimite de préférence vers l'extérieur la couche de filtre (1) et qui a notamment une épaisseur de couche métallique (10) de tout au plus 0,05 mm, de préférence de tout au plus 0,03 mm et même d'au maximum 0,015 mm.

6. Couche de filtre résistante à la chaleur (1) selon l'une des revendications précédentes, **caractérisée en ce que** la couche de filtre (1) est une structure en forme de sandwich (11) et qu'elle présente au moins une couche fibreuse (7) et au moins une couche métallique (9).

7. Corps de filtre (12) pour épurer des gaz d'échappement d'une machine à combustion interne (13), comportant des couches au moins partiellement structurées (1, 15), qui sont empilées et/ou enroulées de manière telle que des canaux (14) pouvant être traversés par un gaz d'échappement sont formés, **caractérisé en ce que** les couches comportent au moins une couche de filtre résistante à la chaleur (1) selon l'une des revendications précédentes.

8. Corps de filtre (12) selon la revendication 7, **caractérisé en ce que** les couches comportent au moins une feuille de tôle structurée (15) et au moins une couche de filtre sensiblement lisse (1), dans quel cas dans au moins une section de liaison (16) les couches (1, 15) sont reliées les unes aux autres par technique de jointoiement, notamment brasées ou soudées.

9. Corps de filtre (12) selon la revendication 8, **caractérisé en ce que** l'au moins une section de liaison (16) est agencée dans l'au moins une région de bord (3) de la couche de filtre (1).

10. Corps de filtre (12) selon l'une des revendications 7 à 9, **caractérisé en ce qu'**il existe des moyens (17, 18, 19, 20, 21, 23) pour la compensation des épaisseurs de couches différentes (4, 4') de la couche de filtre (1).

11. Corps de filtre (12) selon la revendication 10, l'épaisseur de couche (4) de la couche de filtre (1) étant réalisée de façon réduite dans l'au moins une région de bord (3), **caractérisé en ce que** l'au moins une région de bord (3) a une région de déformation (17) et se recouvre elle-même au moins partiellement et est de préférence même brasée.

12. Corps de filtre (12) selon la revendication 10 ou 11, dans quel cas l'épaisseur de couche (4) de la couche de filtre (1) est réalisée de façon réduite dans l'au moins une région de bord (3), **caractérisé en ce que** la zone (18) d'une couche (1, 15), agencée de manière adjacente à l'au moins une région de bord (3), notamment d'une feuille de tôle structurée (15), a une hauteur (20) plus grande par rapport à une zone résiduelle (19).

13. Corps de filtre (12) selon la revendication 12, dans quel cas la couche adjacente est une feuille de tôle structurée (15), **caractérisé en ce que** celle-ci est réalisée dans la zone (18) avec une hauteur de structure (21) plus grande par rapport à la zone résiduelle (19), une grosseur du matériau (22) de la feuille de tôle (15) étant de préférence identique dans les zones différentes (18, 19).

14. Corps de filtre (12) selon l'une des revendications 10 à 13, **caractérisé en ce qu'**au moins une couche de compensation (23) supplémentaire est prévue qui est agencée de préférence de manière adjacente par rapport à l'au moins une région de bord (3) de la couche de filtre (1) avec l'épaisseur de couche réduite (4).

15. Corps de filtre (12) selon l'une des revendications 10 à 14, **caractérisé en ce que** celui-ci a des canaux (14) fermés mutuellement.

16. Corps de filtre (12) selon l'une des revendications 10 à 14, **caractérisé en ce que** celui-ci a des canaux (14) avec une section transversale pouvant être traversée librement sur toute la longueur, dans quel cas des moyens pour générer des différences de pression, respectivement des moyens pour influencer la direction d'écoulement, sont prévus dans les canaux (14).

17. Procédé destiné à la fabrication d'un corps de filtre (12) selon l'une des revendications 7 à 16, comportant les étapes suivantes :
- Fabrication d'au moins une couche de filtre résistante à la chaleur (1);
- Réalisation d'au moins une région de bord (3) de l'au moins une couche de filtre (1) avec une épaisseur de couche réduite (4) ;
- Prévoir des moyens pour compenser les épaisseurs de couches différentes (4, 4') de l'au moins une couche de filtre (1) ;
- Empiler et/ou enrouler au moins une couche de filtre (1) et au moins une feuille de tôle structurée (15) pour former un corps en nids d'abeilles (24) avec des canaux (14) pouvant être traversés par un gaz d'échappement.
- Alimentation en agent de brasage (26) dans au moins une section de liaison (16) de l'au moins une couche de filtre (1) avec l'au moins une feuille de tôle (15) ; et
- Chauffage du corps en nids d'abeilles (24) pour réaliser des jonctions par brasage dans l'au moins une section de liaison (16).

18. Procédé selon la revendication 17, dans lequel avant l'alimentation en agent de brasage (26) le corps en nids d'abeilles (24) est introduit dans un boîtier (27) et durant l'alimentation en agent de brasage (26) celui-ci est agencé avec le boîtier (27) de préférence aussi dans au moins une région de rattachement (28) de l'au moins une couche de filtre (1) et/ou de l'au moins une feuille de tôle (15), de sorte que durant le chauffage des liaisons de brasage sont générées dans l'au moins une région de rattachement (28).

19. Procédé selon la revendication 17 ou 18, dans lequel la réalisation de l'au moins une région de bord (3) avec l'épaisseur de couche (4) réduite est effectuée en exerçant une force de pression (29) sur la couche de filtre (1) dans l'au moins une région de bord (3).

20. Procédé selon l'une des revendications 17 à 19, dans lequel les moyens de compensation se produisent grâce à la déformation de l'au moins une région de bord (3).

21. Procédé selon l'une des revendications 17 à 20, dans lequel les moyens de compensation se produisent grâce à l'agencement d'au moins une couche de compensation (23) entre une couche de filtre (1) et une feuille de tôle adjacente (15).
